(19) Europäisches Patentamt
European Patent Office
Office européen des brevets

(11) EP 1 225 201 A1

(12) EUROPEAN PATENT APPLICATION

(43) Date of publication:
24.07.2002 Bulletin 2002/30

(51) Int Cl.[7]: C08L 23/06, B32B 27/32

(21) Application number: 01100731.7

(22) Date of filing: 12.01.2001

(84) Designated Contracting States:
AT BE CH CY DE DK ES FI FR GB GR IE IT LI LU MC NL PT SE TR
Designated Extension States:
AL LT LV MK RO SI

(71) Applicant: ATOFINA Research
7181 Seneffe (Feluy) (BE)

(72) Inventor: Marechal, Philippe
1400 Nivelles (BE)

# (54) High shrink polyethylene films

(57) Use of a homogeneous blend of a metallocene-catalysed medium density polyethylene (mMDPE) having a Dow Rheology Index (DRI) of at least $5/MI_2$ with low density polyethylene (LDPE), to produce blown films, this composition essentially consisting of from 0.5 to 100 % by weight of mMDPE and of from 99.5 to 0 % by weight of LDPE, based on the total weight of the blend. The blend is optionally coextruded between layers of LDPE.

The films produced according to this invention achieve good balanced shrink properties in machine direction (MD) and transverse direction (TD) with fast shrink speed and high shrink force at room temperature.

EP 1 225 201 A1

## Description

The present invention relates to polyethylene compositions and high performance shrink films thereof combining excellent mechanical properties with good processability while assuring an excellent stiffness and good optical properties. These polyethylene compositions can therefore be used for film applications, requiring this unique combination of properties, such as but not exclusively, food or non-food packaging, personal care products, agricultural or industrial products.

High pressure radicalar polymers such as Low density polyethylene (LDPE), polyethylene vinyl acetate copolymers (EVA), polyethylene butyl acetate copolymers (EBA) and the like exibit excellent optical properties and can be processed at low temperatures and pressures while maintaining a good melt strength. They have however limited possibilities for thin film applications or down-gauging, due to a low draw ratio, and a low stiffness.

Linear-low-density polyethylene (LLDPE) has improved down-gauging possibilities and excellent tear and impact properties; its stiffness however remains low and its processability is well below that of LDPE. However, conventional LLDPE's optical properties do not match those of LDPE. Optical properties of LLDPE have been improved by using metallocene-catalysed LLDPE (mLLDPE) resins; stiffness is however not improved in these products and the processability of these grades is generally worse than that of conventional LLDPE.

The addition of LLDPE to high pressure radicalar polymers such as LDPE in shrink film formulation is well known in order to avoid the formation of holes that could occur during the retraction of shrink film made from such high pressure radicalar polymers.

Wherever high rigidity is needed, LDPE and LLDPE compositions will require overly thick structures. Especially for LLDPE, where excellent impact and tear properties render its down-gauging capability useful, the lack of rigidity is a main drawback because high rigidity is a requirement for product handling.

It is well known that increasing density improves rigidity. Conventional polyethylene prepared either by Ziegler-Natta or chrome catalyst having a density of from 0.925 to 0.965g/$cm^3$ called medium density polyethylene (MDPE) and high density polyethylene (HDPE) but defined in the rest of the text under the term MDPE offer an improved rigidity, excellent processability and down-gauging possibilities. MDPE however lack the good optical properties of LDPE or LLDPE.

Blends of conventional MDPE with LDPE and/or LLDPE can be used for improving rigidity and/or down-gauging and/or processability of LDPE and/or LLDPE but do not provide their good optical properties. WO 95/27005 discloses mixtures of LDPE with LLDPE or mLLDPE. The rigidity of their resins is insufficient.

Therefore, there exists a need for a polyethylene composition that will match the transparency and gloss offered by LDPE and the stiffness of MDPE while maintaining the same impact, tear, down-gauging and processing properties as MDPE.

EP-A-0844277 discloses polyethylene compositions for films that achieve a better balance between the good optical properties of LDPE and the good mechanical and processing properties of MDPE. However this specification does not address the problem of the production of a polyethylene film having balanced shrink properties in machine direction (MD) and transverse direction (TD).

It is therefore an object of the present invention to provide polyethylene compositions for films, prepared with one or more layers, that achieve good balanced shrink properties in machine direction (MD) and transverse direction (TD) with fast shrink speed and high cohesion force at room temperature.

In the present invention, a film is defined as an extremely thin continuous sheet: the upper limit for thickness is of about 250 microns (Hawley's Condensed Chemical Dictionary, Twelfth Edition, Rev. by R.J.Lewis, Van Nostrand Reinhold Co., New York)

This invention concerns films prepared from a homogeneous blend of a low density polyethylene (LDPE) and optionally a linear low density polyethylene (LLDPE) and/or EVA with a metallocene-catalysed medium density polyethylene (mMDPE) having a density of from 0.925 to 0.965 g/$cm_3$ and a Dow Rheology Index (DRI) of at least 5/$MI_2$, this blend consisting of from 0.5% to 100 % by weight of mMDPE and of from 99.5 % to 0% by weight of LDPE, based on the total weight of the blend, and said blend being optionally coextruded between two layers, each layer being a blend comprising a mixture of polymers such as LDPE and/or LLDPE and/or very low density polyethylene (VLDPE) and/or mMDPE and/or polyethylene vinyl acetate copolymers (EVA) and/or polyethylene butyl acetate copolymers (EBA) and/or ionomers, said external layers being the same or different, and the metallocene catalyst system comprising a bridged metallocene compound, alone or in combination with another metallocene catalyst which contributes less than 80% by weight of said catalyst combination.

The present invention is predicated on the surprising discovery by the inventor that by using metallocene catalysed medium density polyethylene (mMDPE) having a DRI ( Dow Rheology Index) of at least 5, preferably at least 10, more preferably at least 20 for a melt index ($MI_2$) of 1g/10 min or a DRI of at least 5/$MI_2$, preferably at least 10/$MI_2$, more preferably at least 20/$MI_2$ for a melt index different than1g/10 min., the $MI_2$ being measured according ASTMD-1238 condition 190°C/2.16 kg, it is possible to produce polyethylene films combining good shrink properties in machine

direction (MD) and transverse direction (TD), fast shrink speed, high shrink force at room temperature while keeping a good rigidity, excellent optical properties, an easy processing and being easy tear with the finger.

Easy tear being defined as the stable propagation of a tear in transverse direction under low tear force.

Moreover the addition of high DRI mMDPE to LDPE reduces the formation of holes which could occur during the shrinkage of a pure LDPE film.

To characterize the rheological behavior of substantially linear ethylene polymers, S Lai and G.W. Knight introduced ( ANTEC '93 Proceedings, Insite™ Technology Polyolefins (ITP)-New Rules in the Structure/Rheology Relationship of Ethylene &-Olefin Copolymers, New Orleans, La., May 1993) a new rheological measurement, the Dow Rheology Index (DRI) which expresses a polymer's "normalized relaxation time as the result of long chain branching". S.Lai et al; ( Antec '94, Dow Rheology Index (DRI) for Insite™ Technology Polyolefins (ITP): Unique structure-Processing Relationships, pp. 1814-1815) defined the DRI as the extent that the rheology of ethylene-octene copolymers known as ITP ( Dow's Insite Technology Polyolefins) incorporating long chain branching into the polymer backbone deviates from the rheology of the conventional linear homogeneous polyolefins that are reported to have no Long Chain Branching by the following normalized equation:

$$DRI = (365000\ (t_0 / \eta_0)-1)/10$$

Where $t_0$ is the characteristic relaxation time of the material and $\eta_0$ is the zero shear viscosity of the material. The DRI is calculated from the best fitting by least squares analysis of the rheological curve (complex viscosity versus frequency) as described in US 6114486 with the following generalized Cross equation, i.e.

$$\eta = \eta_0/(1+(\gamma\ t_0)^n)$$

where n is the power law index of the material, $\eta$ and $\gamma$ are the measured viscosity and shear rate data respectively. The dynamic rheological analysis was performed at 190°C and the strain amplitude was 10%. Results are reported according to ASTM D 4440.

High DRI values mean different chain architecture and probably more long chain branching in the polymer.

Without being bound by a theory, it has been observed that when the dynamic rheological analysis is performed at lower temperature, higher DRI values can be obtained and vice versa.

DRI values ranging from zero for polymers which do not have measurable long chain branching to about 15 are known and have been desribed in several U.S. patents such as for example U.S. Patents N° 6114486, 5674342, 5631069.

The manufacture of the low density and linear low density polyethylenes used in the present invention is known in the art and is described for example in "Encyclopedia of Polymer Science and Engineering", second edition, Volume 6, on pages 404 to 410 (LDPE) and pages 436 to 444 (LLDPE).

The catalyst system used in the present invention to manufacture medium density polyethylene comprises a bridged metallocene compound such as described in EP-A-0790259, preferably a bis tetrahydro-indenyl compound (THI) of the general formula $(IndH_4)_2R''MQ_2$ in which each $IndH_4$ is the same or different and is tetrahydro-indenyl or substituted tetrahydro-indenyl, R" is a bridge which comprises a $C_1$-$C_4$ alkylene radical, a dialkyl germanium or silicon or siloxane, or an alkyl phosphine or amine radical, which bridge is substituted or unsubstitued, M is a Group IV metal or vanadium and each Q is hydrocarbyl having 1 to 20 carbon atoms or halogen.

The preferred bis tetrahydro-indenyl catalyst may be substituted in the same way or differently from one another at one or more positions in the cyclopentadienyl ring, the cyclohexenyl ring and the ethylene bridge.

Each substituent group may be independently chosen from those of formula $XR_v$ in which X is chosen from group IVA, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R as hydrogen or $CH_3$. More preferably, at least one and most preferably both cyclopentadienyl rings are unsubstituted.

In a particularly preferred embodiment, both tetrahydro-indenyls are unsubstituted.

R" is preferably an ethylene bridge which is substituted or unsubstituted.

The metal M is preferably zirconium, hafnium or titanium, most preferably zirconium. Each Q is the same or different and may be a hydrocarbyl or hydrocarboxy radical having 1-20 carbon atoms or a halogen. Suitable hydrocarbyls include aryl, alkyl, alkenyl, alkylaryl or aryl alkyl. Each Q is preferably halogen.

Ethylene bis (4, 5, 6, 7-tetrahydro-1-indenyl) zirconium dichloride is a particularly preferred bis tetrahydro-indenyl compound of the present invention.

The metallocene catalyst component used in the present invention can be prepared by any known method. A preferred preparation method is described in J. Org. Chem. 288, 63-67 (1985).

Any metallocene catalyst known in the art as suitable for the polymerization of olefins can be used in combination with the bis tetrahydro-indenyl compound, in an amount not to exceed 80% by weight of said combination.

These are described for example in EP-A-0790259.

The cocatalyst which activates the metallocene catalyst component can be any cocatalyst known for this purpose such as an aluminium-containing cocatalyst or a boron-containing cocatalyst. The aluminium-containing cocatalyst may comprise an alumoxane, an alkyl aluminium and/or a Lewis acid.

The alumoxanes used in the process of the present invention are well known and preferably comprise oligomeric linear and/or cyclic alkyl alumoxanes represented by the formula:

(I) 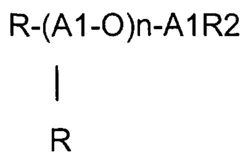

for oligomeric, linear alumoxanes and

(II) 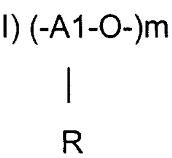

for oligomeric, cyclic alumoxane,
wherein n is 1-40, preferably 10-20, m is 3-40, preferably 3-20 and R is a C1-C8 alkyl group and preferably methyl.

Generally, in the preparation of alumoxanes from, for example, aluminium trimethyl and water, a mixture of linear and cyclic compounds is obtained.

Suitable boron-containing cocatalysts may comprise a triphenylcarbenium boronate such as tetrakis-pentafluorophenyl-borato-triphenylcarbenium as described in EP-A-0427696, or those of the general formula [L'-H] + [B Ar1 Ar2 X3 X4]- as described in EP-A-0277004 (page 6, line 30 to page 7, line 7).

The metallocenes may be supported. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

Suitable inorganic oxide materials which are desirably employed in accordance with this invention include Group 2a, 3a, 4a or 4b metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely divided functionalized polyolefins such as finely divided polyethylene.

Preferably, the support is a silica having a surface area comprised between 100 and 1000 m2/g and a pore volume comprised between 0.5 and 4 ml/g.

The amount of alumoxane and metallocene usefully employed in the preparation of the solid support catalyst can vary over a wide range. Preferably, the aluminium to transition metal mole ratio is comprised between 1:1 and 100:1, preferably between 5:1 and 70:1.

In the present invention, the metallocene medium density polyethylene (mMDPE) is monomodal or bimodal.

The metallocene catalyst utilized to produce the medium density polyethylene required by the present invention can be used in gas, solution or slurry polymerizations. Preferably, in the present invention, the polymerization process is conducted under slurry phase polymerization conditions. It is preferred that the slurry phase polymerization conditions comprise a temperature of from 20 to 125°C, preferably from 60 to 110°C and a pressure of from 0.1 to 8 MPa, preferably from 2 to 5 MPa for a time between 10 minutes and 4 hours, preferably between 0.4 and 2.5 hours.

It is preferred that the polymerization reaction be run in a diluent at a temperature at which the polymer remains as a suspended solid in the diluent. Diluents include, for examples, propane, isobutane, n-hexane, n-heptane, methylcyclohexane, n-pentane, n-butane, n-decane, cyclohexane and the like as well as mixtures thereof. The preferred diluent is isobutane. The diluent can be under liquid or super critical state.

According to a preferred embodiment of the present invention, a continuous reactor is used for conducting the polymerization. This continuous reactor is preferably a loop reactor. During the polymerization process, at least one monomer, the catalytic system and a diluent are flowed in admixture through the reactor.

Alternatively for a bimodal production of mMDPE two reactors in serie can be used.

In the present invention average molecular weights can be further controlled by the introduction of some amount of hydrogen or by changing the temperature during polymerization. When hydrogen is used it is preferred that the relative amounts of hydrogen and olefin introduced into the polymerization reactor be within the range of about 0.001 to 15 mole percent hydrogen and 99.999 to 85 mole percent olefin based on total hydrogen and olefin present, preferably about 0.2 to 3 mole percent hydrogen and 99.8 to 97 mole percent olefin.

In this specification, the density of the polyethylene is measured at 23 °C using procedures of ASTM D 1505.

The densities of the metallocene catalysed medium density polyethylenes (mMDPE) used in the present invention are regulated by the amount of comonomer injected in the reactor; they will range from 0.925 g/cm$^3$ to 0.965 g/cm$^3$ and preferably from 0.930 g/cm$^3$ to 0.960 g/cm$^3$. Examples of comonomer which can be used include 1-olefins propylene, butene, hexene, octene, 4-methyl-pentene, and the like, as well as mixtures thereof up to C12 olefins, the most preferred being hexene. Homopolymers of ethylene may also be used. The melt indices of the metallocene catalysed medium density polyethylene (mMDPE) used in the present invention can be regulated by the amount of hydrogen injected in the reactor; they will range from 0.1 g/10' to 15 g/10', preferably from 0.2 g/10' to 4 g/10'.

Research has been conducted on metallocene catalysts leading to a very wide range of polyethylene products with both narrow and broad molecular weight distribution (MWD).

In changing the MWD, resins are obtained with largely different viscous behaviour. The shear response sensitivity is commonly expressed by the ratio (SR2) of melt flows (ASTM D-1238-89A at 190°C) with loads of 21.6 kg (HLMI) and 2.16 kg (MI2). Resins with a narrow MWD have typical SR2 values of about 15. The resins of the present invention have values going from the typical low values of about 15 for narrow MWD resins to values ranging from 15 to 100 depending on the bridged metallocene catalyst used for polymerisation, the production conditions and the MI2-value of the resulting resin.

Standard additives such as antioxidants may be used for both long term and processing stabilization and if desired, one or more pigments and/or dyes and/or processing aids like fluoro elastomers can also be added. Antistatic, antifog, antiblocking or slip additives may also be added.

The mMDPE catalysed by the procedure described hereabove are used in blends with LDPE and /or linear low density polyethylene (LLDPE) in various ratios.

According to embodiments of the present invention, compositions of LDPE and/or LLDPE with mMDPE are obtained either by preliminary dry blend or extrusion or by direct blend in the hopper or via the extruder.

Materials are run under production conditions for existing commercial applications where shrink properties, processability, downgauging and good optics are key issues. Excellent outputs are achieved.

Generally, the blends of the present invention comprise from 0.5 % to 100% by weight of mMDPE having a DRI of at least 5/$MI_2$ and from 99.5% to 0% by weight of LDPE and/or optionaly LLDPE and/or EVA, based on the total weight of the blend. Preferably the composition of the present invention comprises at least 10 % by weight of mMDPE having a DRI of at least 5/$MI_2$ and from 90 % to 0% by weight of LDPE and/or LLDPE and/or EVA, based on the total weight of the blend, more preferably at least 20 % by weight of mMDPE having a DRI of at least 5/$MI_2$ and from 80 % to 0% by weight of LDPE and/or LLDPE and /or EVA.

The film is produced by coextruding the mMDPE/LDPE blend described hereabove between two optional layers, each layer being a blend comprising a mixture of polymers such as LDPE and/or LLDPE and/or mMDPE and/or VLDPE and/or EVA and/or EBA and/or ionomers. The LDPE and/or LLDPE and/or VLDPE and/or EVA and/or EBA are commercially available grade on the market. The two external layers may be the same or different and each layer is from 0 to 33 wt% and preferably from 5 to 30 wt% of the total weight of the film.

LLDPE and VLDPE can be obtained from metallocene catalysts.

Excellent transparency and gloss are obtained for all the compositions tested in the above mentioned ranges.

It is observed that the shrink films prepared with the compositions and process of the present invention are excellent, particularly the films exhibit a good shrink force, a high shrink speed, a high yield force and are easy tear with the finger.

The blown film is produced by the steps of:

a) preparing a first optional blend comprising a mixture of polymers such as LDPE and/or LLDPE and/or mMDPE and/or VLDPE and/or EVA and/or EBA and/or ionomers;

b) preparing a second blend of 0.5 % to 100 % by weight of a metallocene-catalysed medium density polyethylene (mMDPE) having a DRI of at least 5/$MI_2$ with 99.5 % to 0% by weight of a low density polyethylene prepared with

a non-metallocene catalyst (LDPE) and/or a linear low density polyehtylene (LLDPE) and/or EVA, based on the total weight of the blend, and the metallocene catalyst system consisting of a bridged metallocene compound, alone or in combination with another metallocene catalyst which contributes less than 80 % by weight of said metallocene;

c) preparing a third optional blend comprising a mixture of polymers such as LDPE and/or LLDPE and/or mMDPE and/or VLDPE and/or EVA and/or EBA and/or ionomers, said composition being the same or different from the composition of step a);

d) coextruding the blend of step b) between a layer prepared from the composition of step a) and a layer prepared from the composition of step c), said blend of step b) representing from 33 to 100 % by weight of the total weight of the film;

e) blowing the coextrudate of step d).

The films prepared according to this invention combine good balanced shrink properties in machine direction (MD) and transverse direction (TD) with fast shrink speed and good cohesion force at room temperature while having improved clarity and gloss, high impact resistance while maintaining standard down-gauging possibilities, excellent and balanced tear properties, high yield force, and easy tearability by the finger in the transverse direction.
The compositions as described here above may also be used in the production of multilayer films, lamination films, barrier films and reticulation applications.
These films may also be metallized, corona treated, printed and laminated.

<u>EXAMPLES:</u>

1. Polymerization procedure and product composition.

The polymerization of metallocene-catalysed medium density polyethylene (Resin R1) of the present invention was carried out in a liquid-full slurry loop reactor. Ethylene was injected with 1-hexene together with the catalyst. Isobutane was used as diluent. The polymerization conditions are indicated in Table I

TABLE I

| | | Resin R1 |
|---|---|---|
| C2 feed | (kg/h) | 3900 |
| C6 feed | (g/kg C2) | 22 |
| H2 feed | (g/t) | 42 |
| Iso C4 feed | (kg/h) | 1940 |
| Tibal conc | (ppm) | 100-200 |
| Tpol | (°C) | 90 |

C2 = ethylene
C6 = 1-hexene
Iso C4 = isobutane
TIBAL = triisobutylaluminium

The bridged metallocene catalyst was ethylene bis (tetrahydro-indenyl) zirconium dichloride supported on a silica support which had been treated with a cocatalyst comprising methylalumoxane (MAO).

The resin R1 produced according to the above polymerization conditions is a high DRI metallocene medium density polyethylene (mMDPE). For film applications, Long Chain Branching starts to show its influence on DRI at values that are above 5.

The data concerning resin R1 in comparison with a purely linear metallocene medium density from Philipps identified as Marlex mPact D350 are summarised in Table II.

TABLE II.

| | R1 | Marlex mPact D350 |
|---|---|---|
| Density $g/cm^3$ | 0.934 | 0.933 |
| MI2 g/10 min | 0.9 | 0.9 |

TABLE II. (continued)

| | R1 | Marlex mPact D350 |
|---|---|---|
| DRI | 36 | 0 |
| SR2=HLMI/MI2 | 30 | 16 |

The DRI of R1 and Marlex mPact D350 were determined by fitting the generalized Cross equation on the complexe viscosity measured according to ASTM D4440 by using a RDA 700 from Rheometrics, a diameter plate-plate of 25 mm and a gap between plates of 2 mm +/- 0.2 mm. The apparatus was callibrated according to ARES Instrument normal 902-30004 (equivalent to technical procedure in FR PT ALP RHE-706). The rheological measurements were performed at 190°C under nitrogen and the frequency of the test was performed at 10% of strain.

2. Film preparation.

* The resin R1 (mMDPE) was then blended with a LDPE in the proportions of 30 % by weight of resin R1 (mMDPE) and 70 % by weight of LDPE in order to produce the blend B1. The MI2 of the LDPE was 0.8 g/10 min.
* A blend B2 was prepared with the same ingredients in different proportions: 70 % by weight of resin R1 (mMDPE) and 30 % by weight of LDPE.
* A comparison blend B3 was prepared by mixing 30 % by weight of LLDPE FG106 and 70 % by weight of the same LDPE as that used in blends B1 and B2.
* A comparison blend B4 was prepared by mixing 30% by weight of the mMDPE Marlex mPact D350 from Philipps and 70% by weight of LDPE.

Six films were blown on a Macchi blown film line equipment using a low density configuration characterised by a die of 120 mm, a BUR of 2.5:1 and a die gap of 0.8 mm. All the films were down-gauged to a thickness of 40 microns.
Films F1, F2, F3, F4 were prepared from the blend B1, B2, B3 and B4.
Film F5 was prepared from pure LDPE and Film F6 was prepared from pure Resin 1 similarly as films F1, F2, F3, F4.

3. Film properties.

3.1 Shrink properties

The shrinkage in machine direction (MD) and transverse direction (TD) was measured by immersion of the film in a bath of hot oil at 140°C during 2 minutes according ASTM D2732.
The percentage of shrinkage for each direction (MD and TD) of the six films are given in table III.

Table III

| Films | Component | % weight | Shrinkage MD(%) | Shrinkage TD(%) |
|---|---|---|---|---|
| F1 | R1/LDPE | 30/70 | 71 | 39 |
| F2 | R1/LDPE | 70/30 | 69 | 37 |
| F3 | LLDPE/LDPE | 30/70 | 70 | 36 |
| F4 | mPact D350/LDPE | 30/70 | 70 | 33 |
| F5 | LDPE | 100 | 70 | 42 |
| F6 | R1 | 100 | 63 | 25 |

Pure LLDPE and pure low DRI mMDPE (Marlex mPact D350) could not be extruded by using a narrow die gap of 0.8 mm as desribed here above for the films F1 to F6. This is why no shrink results are given for those pure resins. In contrast pure high DRI mMDPE (R1) could be extruded under those conditions. Moreover even pure it exibits good shrinkage in TD direction.
It can also be observed from table III that the addition of high DRI mMDPE to LDPE (film F1) increases the shrinkage of the film in transverse direction compared to LLDPE/LDPE blend (film F3) and to mPact D350/LDPE (film F4).
Table III shows clearly that the good shrink property in transverse direction is brought by the LDPE (film F5).

For the shrink in machine direction, all the blends studied (F1 to F4) exhibited the same behaviour.

It is surprising that when the high DRI mMDPE (R1) is used even in high concentration with LDPE (film F2), the high DRI mMDPE (R1) still exibits better shrinkage of the film in transverse direction compared to the films using much more LDPE (film F3 and F4).

The cohesion force exerted by the film after shrink and cooling the film at room temperature was measured according ISO/DIS 14616 method by setting the films in an oven at 180°C during 17 seconds.The cohesion force was then measured at room temperature for each film in the machine direction (MD) and transverse direction (TD). Those forces are expressed in Newton (N).

The measurement results are shown in table IV.

Table IV

| Films | Component | % weight | MD Cohesion F. (N) | TD Cohesion F.(N) |
|---|---|---|---|---|
| F1 | R1/LDPE | 30/70 | 1.102 | 0.835 |
| F2 | R1/LDPE | 70/30 | 1.21 | 1.01 |
| F3 | LLDPE/LDPE | 30/70 | 0.902 | 0.622 |
| F4 | mPact D350/LDPE | 30/70 | 1.1 | 0.62 |
| F5 | LDPE | 100 | 0.85 | 0.722 |
| F6 | R1 | 100 | 1.354 | not applicable |

When added to LDPE it is seen that LLDPE and mPact D350 increase the cohesion force in machine direction (MD) but decrease it in transverse direction (TD) compared to pure LDPE (F3 and F4 versus F5). Contrary the high DRI mMDPE (R1) /LDPE blend (film F1) not only increases substantially the cohesion force in machine direction but also increases the cohesion force in transverse direction (TD) when compared to pure LDPE (Film F5). Both cohesion forces are further increased when increasing amount of high DRI mMDPE (R1) with LDPE (Film F2 versus Film F1).

Besides the excellent shrinkage properties as well as the good shrinkage force in machine and transverse directions already described hereabove due to the high DRI metallocene medium density polyehtylene used in LDPE shrink film , it has been unexpectetly found that the shrink speed of such films is also higher compared to LDPE/LLDPE films.Table V illustrates this result.

Table V

| Film | % weight | MD shrink time (s) | MD Elmendorf Tear (N/mm) | Gloss 45° | Haze (%) |
|---|---|---|---|---|---|
| FE8000/R1 | 70/30 | 15 | 33.5 | 60.7 | 7.3 |
| FE8000/FG106 | 70/30 | 20 | 25 | 57.4 | 8.3 |

FE 8000 is a low density polyethylene (LDPE) from Atofina known under the trade mark Lacqtene$^R$ FE8000. FG106 is a Ziegler-Natta linear low density polyethylene (LLDPE) from Polineri known under the trade mark Clearflex$^R$ having a DRI of 0.6.

The films were blown on a Macchi film line using a low density configuration characterised by a die of 120 mm, a BUR of 2.5:1, no neck and a die gap of 0.8 mm.Both films were down-gauged to a thickness of 40 microns.

According to the present invention, the LDPE/ high DRI mMDPE (R1) film not only shrinks more in the transverse direction but it also shrinks faster in the machine direction when compared to the LDPE/LLDPE blend.

Increasing the shrink speed is particularly interesting because it results either in higher shrink-wrapping packaging rates or in decreasing the temperature of the oven during the packaging wrapping process.

Besides those shrink properties, higher MD Tear resistance (MD Elmendorf tear), a better gloss at 45°C and less haze are also observed.

It is unexpected and remarkable that it is the LDPE/ high DRI mMDPE film that give higher tear resistance and better optical properties even if the film density is higher than that of the LDPE/LLDPE blend.

The Elmendorf tear was measured using the method of ASTM-D 1922.

The gloss was measured at an angle of 45° with the Byk-Gardner micro-gloss reflectometer according to ASTM D2457, the haze was measured with the Byk-Gardner Hazegard® system according to ASTM D1003.

The MD shrink time was measured using the method ISO/DIS 14616.

## Claims

**1.** Use of a composition comprising:

(i) An optional first layer based on a blend comprising a mixture of polymers such as low density polyethylene (LDPE) and/or a linear low density polyethylene (LLDPE) and/or a metallocene medium density polyethylene (mMDPE) and/or EVA and/or EBA and/or ionomers;
(ii) a second layer of a homogeneous blend of a low density polyethylene (LDPE) and optionally a linear low density polyethylene (LLDPE) and/or EVA with a metallocene catalysed medium density polyethylene (mMDPE) having a density of from 0.925 to 0.965 g/cm$^3$ and a Dow Rheology Index ( DRI) of at least 5/$MI_2$, this blend consisting of from 0.5% to 100% by weight of mMDPE and of from 99.5% to 0% by weight of LDPE and/or LLDPE and/or EVA based on the total weight of the blend and the metallocene catalyst system consisting of a bridged metallocene compound, alone or in combination with another metallocene catalyst which contributes less than 80% by weight of said metallocene;
(iii) an optional third layer based on a blend comprising a mixture of polymers such as low density polyethylene (LDPE) and/or a linear low density polyethylene (LLDPE) and/or a metallocene medium density polyethylene (mMDPE) and/or EVA and/or EBA and/or ionomers, said third layer being the same as or different from the first layer

to prepare a high shrinkable film having a high shrink speed and high shrink force at room temperature.

**2.** The use according to claim 1 wherein the metallocene polyethylene has a DRI of at least 10/$MI_2$.

**3.** The use according to claim 1 wherein the metallocene polyethylene has a DRI of at least 20/$MI_2$.

**4.** The use according to claim 1 wherein the blend in the second layer comprises at least 10 % by weight of mMDPE.

**5.** The use according to claim 1 or claim 4, wherein the bridged metallocene catalyst is a bis tetrahydro-indenyl compound.

**6.** The use according to any one of the preceding claims, wherein the bridged metallocene is a ethylene bis tetrahydro-indenyl zirconium compound.

**7.** The use according to any one of the preceding claims, wherein the two external layer have the same composition.

**8.** The use according to any one of the preceding claims wherein the optional first layer (i) and/or the optional third layer (iii) are based on a blend comprising LDPE and/or LLDPE.

**9.** The use according to claim 8 wherein the LLDPE of the optional first layer if present and/or of the optional third layer if present can be replaced in part or in total by mMDPE.

**10.** The use according to any one of the preceding claims, wherein each of the two external layers represent from 5 to 33 wt % of the total weight of the film.

**11.** The use according to any one of the preceding claims, wherein the two external layers have the same thickness.

**12.** Use of the composition according to any one of the preceding claims in shrink film application.

**13.** A process for producing a blown film according to the following steps:

a) preparing a first optional blend comprising a mixture of polymers such as LDPE and/or LLDPE and/or mMDPE and/or VLDPE and/or EVA and/or EBA and/or ionomers;
b) preparing a second blend of 0.5 % to 100 % by weight of a metallocene-catalysed medium density polyethylene (mMDPE) having a DRI of at least 5/$MI_2$ with 99.5 % to 0 % by weight of a low density polyethylene prepared with a non-metallocene catalyst (LDPE) and/or a linear low density polyehtylene (LLDPE) and/or EVA, based on the total weight of the blend, and the metallocene catalyst system consisting of a bridged metallocene compound, alone or in combination with another metallocene catalyst which contributes less than 80 % by weight of said metallocene;

c) preparing a third optional blend comprising a mixture of polymers such as LDPE and/or LLDPE and/or mMDPE and/or VLDPE and/or EVA and/or EBA and/or ionomers, said composition being the same or different from the composition of step a);
d) coextruding the blend of step b) between a layer prepared from the composition of step a) and a layer prepared from the composition of step c), said blend of step b) representing from 33 to 100 % by weight of the total weight of the film;
e) blowing the coextrudate of step d).

European Patent Office

# EUROPEAN SEARCH REPORT

Application Number
EP 01 10 0731

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | EP 1 108 530 A (FINA RESEARCH) 20 June 2001 (2001-06-20) * the whole document * | 1-13 | C08L23/06 B32B27/32 |
| D,X | EP 0 870 802 A (FINA RESEARCH) 14 October 1998 (1998-10-14) * the whole document * | 1-13 | |
| D,X | EP 0 844 277 A (FINA RESEARCH) 27 May 1998 (1998-05-27) * the whole document * | 1-13 | |

TECHNICAL FIELDS SEARCHED (Int.Cl.7)
C08L
B32B

The present search report has been drawn up for all claims

| Place of search | Date of completion of the search | Examiner |
|---|---|---|
| MUNICH | 10 January 2002 | Van Golde, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 10 0731

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2002

| Patent document cited in search report | | Publication date | Patent family member(s) | | Publication date |
|---|---|---|---|---|---|
| EP 1108530 | A | 20-06-2001 | EP | 1108749 A1 | 20-06-2001 |
| | | | EP | 1108530 A1 | 20-06-2001 |
| | | | AU | 2364701 A | 25-06-2001 |
| | | | WO | 0144365 A1 | 21-06-2001 |
| EP 0870802 | A | 14-10-1998 | EP | 0870802 A1 | 14-10-1998 |
| | | | EP | 0844277 A1 | 27-05-1998 |
| | | | US | 6114456 A | 05-09-2000 |
| EP 0844277 | A | 27-05-1998 | EP | 0844258 A1 | 27-05-1998 |
| | | | EP | 0870802 A1 | 14-10-1998 |
| | | | EP | 0844277 A1 | 27-05-1998 |
| | | | US | 6114456 A | 05-09-2000 |

EPO FORM P0459

For more details about this annex : see Official Journal of the European Patent Office, No. 12/82